# EUROPEAN PATENT APPLICATION

(11) **EP 4 636 987 A1**
(43) Date of publication of application: **22.10.2025**
(21) Application number: 25170801.2
(22) Date of filing: 15.04.2025
(51) Int. Cl.: H02J 7/34, H02J 7/14, B60L 58/13, B60L 58/20

(54) **POWER CONVERTER AND CHARGING SYSTEM WITH POWER CONVERTER**

(30) Priority: 19.04.2024 US 202463636255 P; 11.03.2025 US 202519076578
(71) Applicant: Navico Group Americas LLC, Menomonee Falls, WI 53051 (US)
(72) Inventor: TIWARI, Pallav, 1274RX Huizen (NL); HESSELS, Harm, 3401TL IJsselstein (NL); LAZAROV, Aleksandar, 3063ED Rotterdam (NL)
(74) Representative: Gill Jennings & Every LLP

(57) **Abstract**

A system (10) includes a source of electrical energy (78), a first battery (14) electrically connected to and configured to be charged by the source of electrical energy (78), and a second battery (16) electrically connected to at least one load. A power converter module (30) is electrically connected between the first battery (14) and the second battery (16). The power converter module (30) is configured such that the source of electrical energy (78) is used to charge the second battery (16) only if a measured voltage of the first battery (14) is above a first setpoint voltage.

## Description

### FIELD

The present disclosure relates to systems and devices for charging batteries, for example batteries installed on vehicles powered by an internal combustion engine.

### BACKGROUND

U.S. Patent No. 11,381,103 discloses a variable voltage charging system for a vehicle including an alternator operatively connected to an engine and configured to alternately output at least a low charge voltage to charge a low voltage storage device and a high charge voltage to charge a high voltage storage device. A switch is configured to switch between connecting the alternator to the low voltage storage device and connecting the alternator to the high voltage storage device. A controller is configured to control operation of the alternator and the switch between at least a low voltage mode and a high voltage mode. In the low voltage mode, the alternator outputs the low charge voltage and the switch is connecting the alternator to the low voltage storage device. In the high voltage mode, the alternator outputs the high charge voltage and the switch is connecting the alternator to the high voltage storage device.

U.S. Patent No. 11,897,591 discloses a marine propulsion system including an engine effectuating rotation of an output shaft, a battery, an alternator having a rotor driven into rotation by the output shaft and that is configured to generate a charge output to the battery, a battery state of charge sensor configured to measure a battery charge value of the battery, and a control system. This control system is configured to receive a demand value and/or a temperature, receive the battery charge value from the battery state of charge sensor; and control the alternator to adjust the charge output based on at least one of the battery charge value and the demand value and/or temperature.

It is also known to equip a vehicle in which a vehicular electric power source system is mounted with a high-voltage system battery that is an electricity storage device of a high-voltage system, a low-voltage system battery that is an electricity storage device of a low-voltage system, and a DC-DC voltage converter that has at least a step-down voltage conversion mode, which decreases the voltage of the high-voltage system to the voltage of the low-voltage system and thus supplies electric power from the high-voltage system to the low-voltage system, and a step-up voltage conversion mode, which increases the voltage of the low-voltage system to the voltage of the high-voltage system and thus supplies electric power from the low-voltage system to the high-voltage system.

### SUMMARY

This Summary is provided to introduce a selection of concepts that are further described below in the Detailed Description. This Summary is not intended to identify key or essential features of the claimed subject matter, nor is it intended to be used as an aid in limiting the scope of the claimed subject matter.

A system according to one exemplary embodiment of the present disclosure comprises a source of electrical energy, a first battery electrically connected to and configured to be charged by the source of electrical energy, and a second battery electrically connected to at least one load. A power converter is electrically connected between the first battery and the second battery. The power converter is configured such that the source of electrical energy is used to charge the second battery only if a measured voltage of the first battery is above a first setpoint voltage. The power converter comprises a DC-DC converter, an input voltage regulator that adjusts an input current limit such that a measured voltage of the first battery does not drop below the first setpoint voltage, a processor that determines a maximum allowed charge current based on the input current limit and based on a predetermined output current limit, and an output voltage regulator that determines a desired charge current so as to bring a measured voltage of the second battery to a second setpoint voltage. The DC-DC converter outputs the maximum allowed charge current or the desired charge current so as to charge the second battery while the measured voltage of the first battery is maintained at or above the first setpoint voltage.

According to one aspect, the first setpoint voltage is a voltage at which the first battery is fully charged.

According to one aspect, the processor selects whichever of the maximum allowed charge current or the desired charge current has a lower magnitude as a setpoint inductor current.

According to one aspect, the system further comprises an inductor current regulator that determines an output control signal that will bring a measured inductor current of the DC-DC converter close to the setpoint inductor current.

According to one aspect, the source of electrical energy is an alternator driven by an internal combustion engine, and the first battery is electrically connected to a starter motor of the engine.

A system according to another exemplary embodiment of the present disclosure comprises a first battery, a second battery, and a DC-DC converter electrically connected between the first and second batteries. An input voltage regulator adjusts an input current limit such that a measured voltage of the first battery does not drop below a first setpoint voltage. A processor determines a maximum allowed charge current based on the input current limit and based on a predetermined output current limit. An output voltage regulator determines a desired charge current so as to bring a measured voltage of the second battery to a second setpoint voltage. The DC-DC converter outputs the maximum allowed charge current or the desired charge current so as to charge the second battery while the measured voltage of the first battery is maintained at or above the first setpoint voltage.

According to one aspect, the system further comprises an internal combustion engine and at least one house load. The first battery is an engine battery electrically connected to a starter motor of the engine and the second battery is a service battery electrically connected to the at least one house load.

According to one aspect, the system further comprises an alternator driven by the engine, and the alternator is configured to generate electrical energy to charge at least one of the first and second batteries.

According to one aspect, the processor selects whichever of the maximum allowed charge current or the desired charge current has a lower magnitude as a setpoint inductor current.

According to one aspect, the system further comprises an output current regulator that determines an output control signal that will bring a measured inductor current of the DC-DC converter close to the setpoint inductor current.

According to one aspect, the system further comprises a source of electrical energy, and the first battery is electrically connected to and configured to be charged by the source of electrical energy.

According to one aspect, the predetermined output current limit is a user-selected value.

According to one aspect, the first setpoint voltage is a voltage at which the first battery is fully charged.

A power converter module according to one exemplary embodiment of the present disclosure comprises a first terminal configured to be connected to a first battery and a source of electrical energy, and a second terminal configured to be connected to a second battery. A DC-DC converter is electrically connected between the first terminal and the second terminal. An input voltage regulator adjusts an input current limit such that a measured voltage of the first battery does not drop below a first setpoint voltage. A processor determines a maximum allowed charge current based on the input current limit and based on a predetermined output current limit. An output voltage regulator determines a desired charge current so as to bring a measured voltage of the second battery to a second setpoint voltage. The DC-DC converter outputs the maximum allowed charge current or the desired charge current so as to charge the second battery while the measured voltage of the first battery is maintained at or above the first setpoint voltage.

According to one aspect, the DC-DC converter selects whichever of the maximum allowed charge current or the desired charge current has a lower magnitude as a setpoint inductor current.

According to one aspect, the power converter module further comprises an output current regulator that determines an output control signal that will bring a measured inductor current of the DC-DC converter close to the setpoint inductor current.

According to one aspect, the source of electrical energy is an alternator, the first battery is an engine battery electrically connected to a starter motor of an internal combustion engine that drives the alternator, and the second battery is a service battery electrically connected to at least one house load.

According to one aspect, the predetermined output current limit is a user-selected value.

According to one aspect, the first setpoint voltage is a voltage at which the first battery is fully charged.

### BRIEF DESCRIPTION OF THE DRAWINGS

The present disclosure is described with reference to the following Figures. The same numbers are used throughout the Figures to reference like features and like components.
FIG. 1 illustrates a system including first and second batteries and a power converter according to the present disclosure.
FIG. 2 illustrates an exemplary power converter module according to the present disclosure.
FIG. 3 is a stateflow diagram showing operation of the power converter module.
FIG. 4 is a diagram showing various charge levels for a first battery.
FIG. 5 shows flow of current in the system in a first state.
FIG. 6 shows flow of current in the system in a second state.
FIG. 7 shows flow of current in the system in a third state.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items.

Unless otherwise specified or limited, the phrases "at least one of A, B, and C," "one or more of A, B, and C," and the like, are meant to indicate A, or B, or C, or any combination of A, B, and/or C, including combinations with multiple instances of A, B, and/or C. Likewise, unless otherwise specified or limited, the terms "mounted," "connected," "linked," "supported," and "coupled" and variations thereof are used broadly and encompass both direct and indirect mountings, connections, supports, and couplings. Further, unless otherwise specified or limited, "connected" and "coupled" are not restricted to physical or mechanical connections or couplings and can include electrical and/or electromechanical couplings.

As used herein, unless otherwise limited or defined, discussion of particular directions is provided by example only, with regard to particular embodiments or relevant illustrations. For example, discussion of "top," "bottom," "front," "back," "left," "right," "lateral" or "longitudinal" features is generally intended as a description only of the orientation of such features relative to a reference frame of a particular example or illustration. Correspondingly, for example, a "top" feature may sometimes be disposed below a "bottom" feature (and so on), in some arrangements or embodiments. Additionally, use of the words "first," "second", "third," etc. is not intended to connote priority or importance, but merely to distinguish one of several similar elements from another.

Through research and development, the present inventors have recognized that in systems comprising a battery being charged by an alternator (which is connected to a power generation source such as an internal combustion engine) - usually called the engine battery - and a secondary battery - usually called the service battery - the need arises for the service battery to be charged with the excess energy of the alternator once the engine battery has been fully charged. Existing systems for charging a service battery, which do not take into account the charge of the engine battery, utilize a standalone DC-DC converter. The standalone converter does not have any information regarding whether the alternator is running and defaults to charging the service battery from the alternator/engine battery node, which can lead to discharging the engine battery. Other existing systems may include a "smart" engine battery that is able to instruct a standalone DC-DC converter when to charge the service battery based on the charge current flowing through the engine battery. The latter type of system is complex and may be prohibitively costly to some users. In contrast, the present system includes a power converter having a constant-voltage power control feature that prioritizes charging of the engine battery, taking into account any load(s) that may be connected to the engine battery, and uses any excess energy that the alternator is able to provide to charge the service battery.

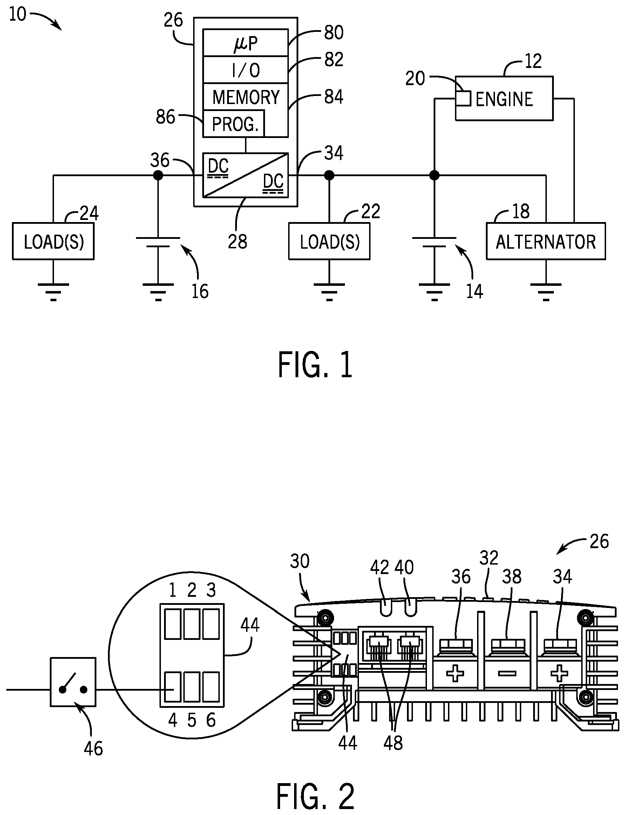

FIG. 1 illustrates a system 10 according to the present disclosure. The system 10 may be installed on a marine vessel, a recreational vehicle (RV), or may be part of any other vehicle that comprises an internal combustion engine 12 and one or more batteries 14, 16. The system 10 includes an alternator 18 driven by the engine 12, such as by way of a belt and pulley coupling the crankshaft of the engine 12 to the input shaft of the alternator 18, as is known in the art. The alternator 18 may include a voltage regulator and a rectifier, as is also well known. When the engine 12 is running, the alternator 18 generates electrical energy, which is provided to the remainder of the system 10 as direct current.

The system 10 includes an engine battery 14 electrically connected to a starter motor 20 of the engine 12 so as to provide electrical energy to the starter motor 20. The starter motor 20 is configured to crank the engine 12 upon start-up in response to a "start" command, such as turning of a key in an ignition, as is known. The engine battery 14 may also be electrically connected to other loads 22, such as, for example, an engine control unit (ECU) of the engine 12, mandatory lights, or other high-priority loads/functions in the system 10. A service battery 16 is also provided and is electrically connected to at least one house load 24. The at least one house load 24 generally encompasses service functions and may comprise, for example, auxiliary lighting, pumps, and/or accessories such as refrigerators, stoves, etc. For example, multiple batteries are often provided on vehicles such as medium- and heavy-duty trucks, recreational vehicles (RVs), and boats. On a medium- or heavy-duty truck, the engine battery is used to start the engine, while the service battery is used to power temperature control devices, cabin lights, and other auxiliary electronics. On an RV, the engine battery is used to start the engine, while the service battery is used to power temperature control devices, cabin lights, kitchen devices, televisions, water pumps, heaters, etc. On a boat, the engine battery is used to start the engine of the primary propulsion device (e.g., outboard drive, stern drive, inboard drive) or to run bilge pumps, while the service battery is used to power a trolling motor, gauges, bilge pumps, etc.

A power converter 26 is electrically connected between the engine battery 14 and the service battery 16. The power converter 26 ensures that the two batteries 14, 16 are electrically separated such that one battery is not discharged when the other battery is used to power a load, and also allows the two batteries 14, 16 to be charged from the same source of electrical energy. The power converter 26 comprises a DC-DC converter 28, which may convert DC of one voltage to DC of another voltage or may be used to separate two systems of the same nominal voltage. In the present embodiment, the DC-DC converter 28 is a bidirectional (buck/boost) DC-DC converter that operates in both a buck mode to step down voltage and a boost mode to step up voltage and includes diodes, transistors (e.g., MOSFETs), and a capacitor and/or and an inductor for providing such functionality, as is known. The DC-DC converter 28 may be an isolated or a non-isolated converter.

The power converter 26 includes the noted DC-DC converter 28, which is in signal communication with a microprocessor 80. In some embodiments, microprocessor 80 can be configured to execute an executable program 86 (e.g., software) from a memory system 84. Note that, in some embodiments, microprocessor 80 can be configured to execute one or more portions of executable program 86 via programmed logic (e.g., implemented in hardware and/or firmware), in addition to, or in lieu of, software stored in memory system 84 (e.g., executable program 86 can be stored, at least in part, within circuitry of microprocessor 80, in addition to, or in lieu of, memory system 84).

In some embodiments, memory system 84 can include any suitable storage device or devices that can be used to store instructions, values, etc., that can be used, for example, by microprocessor 80 to perform processes described herein and to communicate with one or more other components of the system 10 via a communications system(s) (e.g., implemented as part of an I/O system 82), etc. Memory system 84 can include any suitable volatile memory, non-volatile memory, storage, or any suitable combination thereof. In some embodiments, memory system 84 can be configured to store executable program 86, which may include a set of computer readable instructions.

In some embodiments, an I/O system 82 can provide communication between microprocessor 80 and/or one or more other portions of the system 10, such as the batteries 14, 16, external controllers, external software applications, etc. I/O system 82 can include any suitable hardware, firmware, and/or software for communicating information over a communication network or combination of communication networks, which can facilitate communication with other components of the system 10 using any suitable wired and/or wireless connections, such as for example, a network bus.

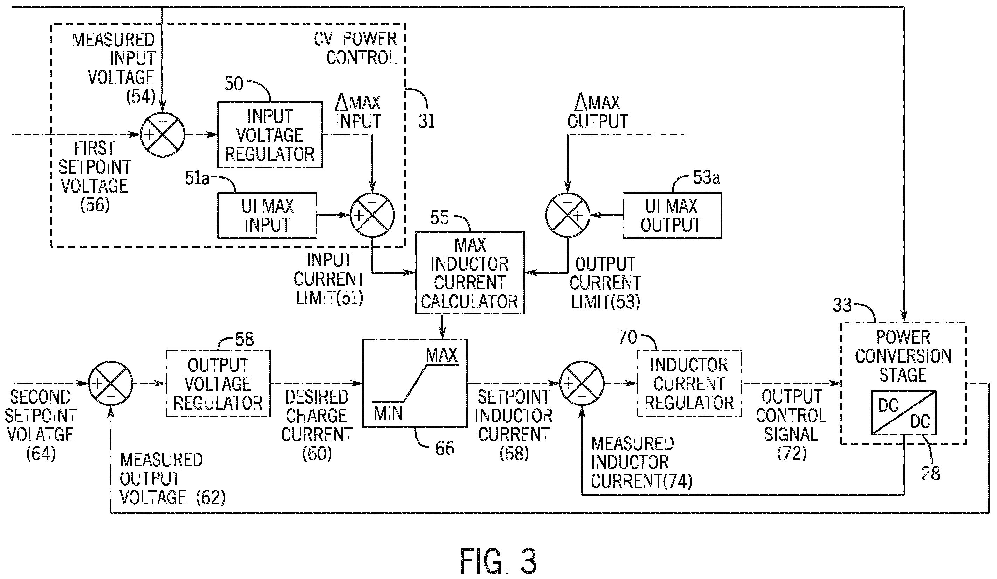

In some embodiments, microprocessor 80 can load and execute executable program 86 from memory system 84 (and/or via logic implemented within microprocessor 80), access data stored within memory system 84, and direct the power converter 26 to operate in several different charging modes or states as discussed further herein below. For example, microprocessor 80 can load and execute executable program 86 in order to carry out the CV power control 31 described below with respect to FIG. 3.

Often, when such a system 10 is provided on a truck, marine vessel, or RV, the engine battery 14 is a lead-acid battery (flooded, gel, or AGM) capable of providing a short pulse of high power to the starter motor 20 in order to crank the engine 12. Typically, the service battery 16 is a lithium-ion battery that can supply steady power for a long duration/run-time, but which may not be suitable for starting the engine 12. Other types of batteries could be used in the system 10, and the exemplary chemistry provided herein is not limiting on the scope of the present disclosure. Henceforward, therefore, the engine battery 14 will be referred to generically as a "first battery" and the service battery 16 will be referred to generically as a "second battery."

FIG. 2 shows an end view of a power converter module 30 comprising a housing 32, within which the circuitry of the power converter 26 may be packaged. The power converter module 30 comprises a first terminal 34 configured to be connected to the first battery 14 and the alternator 18. A second terminal 36 is configured to be connected to the second battery 16. Although not shown in FIG. 2, the DC-DC converter 28 is electrically connected between the first terminal 34 and the second terminal 36 (see FIG. 1). A ground terminal 38 is also provided. Two status indicator lights 40, 42 are provided in the housing 32, the purpose of which will be described herein below. An accessories connector port 44 is provided, of which a close-up is shown. The accessories connector port 44 includes six pins, with the following exemplary functions:
Pin 1: positive battery voltage sense input
Pin 2: negative battery voltage sense input
Pin 3: trigger to change direction of charging
Pin 4: input for remote switch 46
Pins 5 and 6: battery temperature sensor input

Fewer or more pins could be provided in other embodiments. The power converter module 30 also includes ports 48 for connection of communications buses to the I/O system 82, as well as a series of DIP switches (not shown) for changing configurations.

The power converter module 30 can compensate cable losses as determined by the voltage drop across pins 1 and 2. In order to accurately measure the battery voltage, the voltage sense wires should be connected as close to the poles of the battery being charged as possible. The power converter module 30 is configured to compensate cable losses up to a maximum of, for example, 0.55 volts.

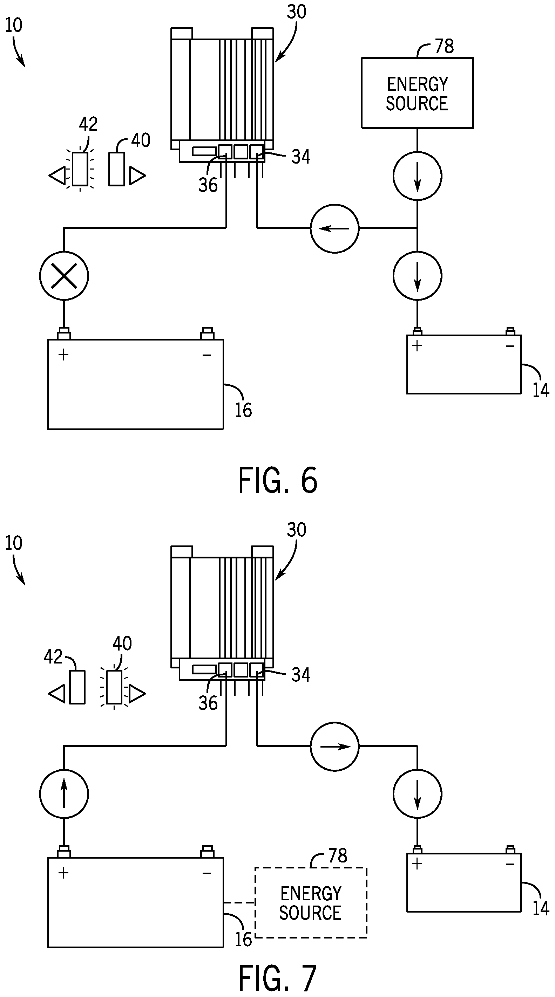

Pin 3 is used for connection of a latching switch to toggle the direction of the current flow. That is, the power converter module 30 is configured to use energy from the alternator 18 to charge the first battery 14 and second battery 16, and is configured to cause current to flow in the opposite direction to use energy from the second battery 16 to charge the first battery 14. As such, the first terminal 34 can operate as an input or an output terminal, and the second terminal 36 can operate as an input or an output terminal. In some embodiments, the maximum voltage to trigger pin 3 is < 65 volts, but the switching point is at 5 volts. In other embodiments, described herein below with respect to FIG. 6, the direction of current flow can be reversed by an external controller or software application.

In some embodiments, the power converter module 30 has no on/off switch, and a remote switch 46 may therefore be connected to turn the power converter module 30 on or off. In applications in which the system 10 is installed on a vehicle, the engine run signal may be connected to pin 4 so that the power converter module 30 is on when the engine 12 is running and the alternator 18 is generating electrical energy. The engine run signal can be provided with one of two enable levels: active low, connect to ground (between 0 and 0.5 volts), or active high, connect to positive battery voltage (between 3 and 65 volts). The remote switch input configuration can be done by DIP switch or via software configuration.

Battery temperature sensor input at pins 5 and 6 may be used when one of the batteries 14, 16 is a lead-acid battery. The power converter module 30 automatically adapts the charge voltage for deviating temperatures. When the battery temperature is low, the charge voltage increases. When the battery temperature is high, the charge voltage is decreased. This extends the life of the battery. Note that Lithium-ion batteries do not require an external temperature sensor or temperature compensation.

FIG. 3 shows a stateflow for constant-voltage (CV) power control 31 and power conversion 33 as performed by the power converter module 30. The stateflow will first be described from a high level. An input voltage regulator 50 adjusts an input current limit 51 such that a measured voltage 54 of the first battery 14 does not drop below a first setpoint voltage 56. The microprocessor 80 determines a maximum allowed charge current 52 based on the input current limit 51 and based on a predetermined output current limit 53. An output voltage regulator 58 determines a desired charge current 60 so as to bring a measured voltage 62 of the second battery 16 to a second setpoint voltage 64. The DC-DC converter 28 outputs the maximum allowed charge current 52 or the desired charge current 60 so as to charge the second battery 16 while the measured voltage 54 of the first battery 14 is maintained at or above the first setpoint voltage 56. In one example, as shown at block 66, the microprocessor 80 selects whichever of the maximum allowed charge current 52 or the desired charge current 60 has a lower magnitude as a setpoint inductor current 68. An inductor current regulator 70 determines an output control signal 72 that will bring a measured inductor current 74 of the DC-DC converter 28 close to the setpoint inductor current 68. The output control signal 72 may be a signal to change the duty cycle of the power provided to the switching element of the DC-DC converter 28, a signal to vary a resistance of a variable-resistance resistor in parallel with the switching element, or a command to connect a high-resistance resistor in parallel with the switching element, each of which will ultimately control the output voltage of the DC-DC converter 28 used for charging. In an example in which an isolated DC-DC converter is used, a combination of switching elements with step-up/down transformers could be used to control the output voltage.

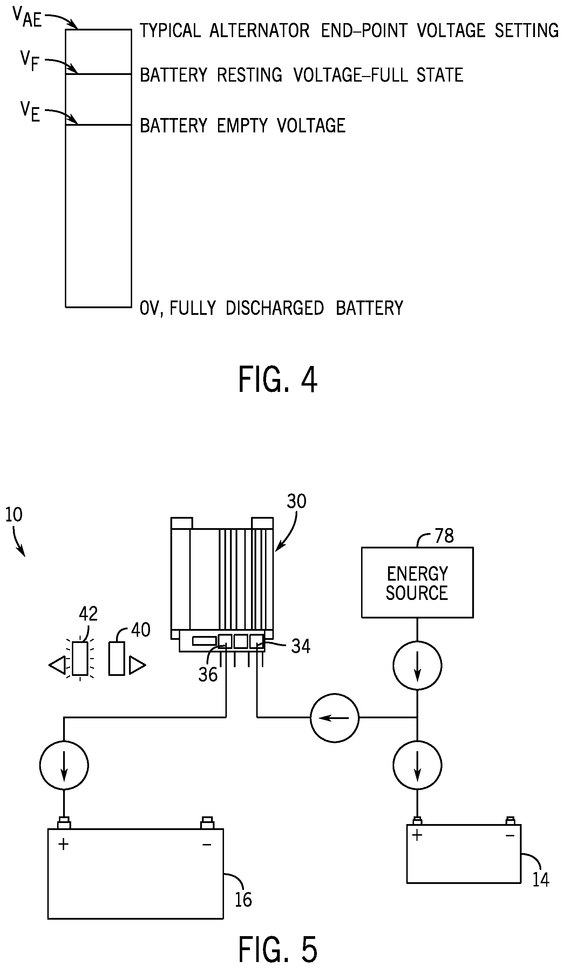

Referring briefly back to FIG. 1, the first battery 14 is connected to the first terminal 34 and the second battery 16 is connected to the second terminal 36. In one example, the first setpoint voltage 56 is a voltage at which the first battery 14 is fully charged. For example, referring briefly to FIG. 4, different charge levels are shown for the first battery 14. The alternator 18, through its respective alternator controller, is typically set to a higher output voltage setpoint than the resting voltage of the first battery 14 when the first battery 14 is fully charged. This means that when the first battery 14 is fully charged by the alternator 18, the alternator 18 will output a higher voltage than that needed to fully charge the first battery 14. The first battery 14 has a useful capacity between the V_{E} and the V_{F} voltage levels. A typical alternator 18 will have its output voltage setpoint set to the V_{AE} level and will charge the battery according to a "constant current - constant voltage" (CC/CV) method. In contrast, the power converter 26 of the present disclosure is configured to employ a method that ensures constant input voltage with maximum current limit regulation. In other words, the present power converter 26 is configured such that electrical energy generated by the alternator 18 is used to charge the second (service) battery 16 only if a measured voltage 54 of the first (engine) battery 14 is above a first setpoint voltage 56 (e.g., a voltage at which the first battery 14 is fully charged). This ensures that the first battery 14 is not drained to charge the second battery 16, and thus the first battery 14 is able to perform critical functions such as starting the engine 12, powering the ECU, and powering mandatory lights.

In another example, the first setpoint voltage 56 is user-defined. For example, a user can input a desired first setpoint voltage 56 via a keypad, mouse, dial, touchscreen, or other known user interface. In some embodiments, the user interface can be directly linked to the microprocessor 80 of the power converter module 30 via the I/O system 82, such as the case of a dial. In other embodiments, the user may interact with an external control module or software application to input a desired first setpoint voltage 56, after which the external control module or software application will command the microprocessor 80 of the power converter module 30 to adjust the first setpoint voltage 56 accordingly. It may be desirable for the user to be able to change the first setpoint voltage 56 in this manner if the user does not necessarily require the first battery 14 to be fully charged before the power converter module 30 will begin to charge the second battery 16. For example, a user may choose a first setpoint voltage 56 that is lower than the voltage V_{F} at which the first battery 14 is fully charged if an external source of power is or will soon be readily available for charging the first battery 14. Further, the user may desire to change the first setpoint voltage 56 for different types of alternators, regulators, battery types, and combinations of these elements. The first setpoint voltage 56 should be set so that it is lower than the alternator setpoint V_{AE}. In one example in which the power converter 26 is configured to accept a default 12-volt input, the default factory-set first setpoint voltage 56 is 13.25 volts, and the user may select a first setpoint voltage 56 between 8-15 volts. In some embodiments, the user can enable and disable the CV power control 31 via a user interface.

The second setpoint voltage 64 may be the desired nominal output voltage at the second terminal 36 and may be a default setting and/or may be configurable by the user. The second setpoint voltage 64 is the value to which the power converter module 30 will attempt to charge the second battery 16 after the first battery 14 has been charged to the first setpoint voltage 56 (e.g., fully charged or some other user-selected value).

The measured input voltage 54 at the first terminal 34 and the measured output voltage 62 at the second terminal 36 can be determined by known voltage-sense circuitry, such as conditioning and filtering circuits, and subsequent analog to digital conversion via an A/D converter (not shown). Similarly, the measured inductor current 74 can be determined by known current-sense circuitry (e.g., a current sense resistor) configured to sense the current passing through the inductor of the DC-DC converter 28.

The input voltage regulator 50 is a feedback mechanism configured to achieve a constant voltage, that is, the first setpoint voltage 56. The error (or difference) between the measured input voltage 54 at the first terminal 34 and the first setpoint voltage 56 is filtered/amplified by a compensator . Ther input voltage regulator 50 can be look-up or droop based. In another example, the compensator could be implemented in the hardware of the power converter module 30, using comparators or op-amps in combination with resistors/capacitors to achieve the desired filtering/amplification. The input voltage regulator 50 outputs a value "Δ Max input" that will adjust the input current limit 51 from the previous iteration of control so as to minimize the error or difference between the measured input voltage 54 at the first terminal 34 and the first setpoint voltage 56. Similarly, the output voltage regulator 58 is a feedback mechanism configured to achieve a constant voltage, that is, the second setpoint voltage 64. The error (or difference) between the measured output voltage 62 at the second terminal 36 and the second setpoint voltage 64 is filtered/amplified by a compensator. The output voltage regulator 58 could be look-up or droop based or implemented in the hardware of the power converter module 30, as with the input voltage regulator 50. The output voltage regulator 58 outputs a desired charge current 60 that will minimize the error or difference between the measured output voltage 62 at the second terminal 36 and the second setpoint voltage 64.

The input current limit 51 is initially a user-selected value, which may be input by the user via a user interface, as shown at 51a. During a given iteration of control, the input voltage regulator 50 calculates the change "Δ Max input" in the input current limit that will achieve the first setpoint voltage 56. The predetermined output current limit 53 is likewise initially a user-selected value, which may be input by the user via a user interface, as shown at 53a. The predetermined output current limit 53 may be adjusted by the value "Δ Max output" to accommodate, for example, temperature variations in the battery. For example, a high internal battery temperature may result in the predetermined output current limit 53 being reduced. Further, the initial predetermined output current limit 53 may be a first predetermined value when the power converter 26 is first turned on and may gradually ramp up to a higher value over time.

A maximum inductor current calculator 55 calculates the maximum allowed charge current 52 based on the input current limit 51 and the output current limit 53. When in boost mode, the input current limit 51 is the same as the inductor current. The maximum inductor current calculator 55 translates the output current limit 53 to an inductor current using an energy conversion equation and compares the translated value to the input current limit 51. The maximum inductor current calculator 55 outputs the lower of the two values as the maximum allowed charge current 52. When in buck mode, the output current limit 53 is the same as the inductor current. The maximum inductor current calculator 55 translates the input current limit 51 to an inductor current using an energy conversion equation and compares the translated value to the output current limit 53. The maximum inductor current calculator 55 outputs the lower of the two values as the maximum allowed charge current 52.

Element 66 represents a selector block implemented by the microprocessor 80, which selects whichever of the maximum allowed charge current 52 (as determined by the maximum inductor current calculator 55) or the desired charge current 60 (as determined by the output voltage regulator 58) has a lower magnitude as a setpoint inductor current 68.

The output current regulator 70 is a feedback mechanism configured to achieve a constant current, that is, the setpoint inductor current 68. The error (or difference) between the measured inductor current 74 of the DC-DC converter 28 and the setpoint inductor current 68 as determined by the selection block 66 is filtered/amplified by a compensator. The inductor current regulator 70 outputs an output control signal 72 that will minimize the error or difference between the measured inductor current 74 of the DC-DC converter 28 and the setpoint inductor current 68.

Although the present example is discussed in terms of controlling for setpoint inductor current 68, other algorithms could be used to control the output of the DC-DC converter 28. For example, the DC-DC converter 28 could regulate the output voltage directly, could regulate the output current directly, or could regulate some other measurable value directly.

FIG. 5 shows a schematic of the flow of electrical energy in an example state of the system 10. Note that in FIG. 5, the alternator has been replaced with a generic source of electrical energy 78, which may be, for example, an alternator, a shore power source, or a charger. In this state, the measured input voltage 54 at the first terminal 34 is greater than the first setpoint voltage 56. This will be the case, for example, when the first battery 14 is fully charged and the alternator 18 is generating electrical energy at a potential above the resting voltage of the first battery 14. (In other words, the voltage measured at the first terminal 34 is between V_{F} and V_{AE}.) The input voltage regulator 50 outputs a value of Δ Max input that adds to the input current limit 51 from the previous iteration of control, it being noted that there is saturation implemented such that the value of the input current limit 51 does not exceed the user-input value 51a. The input current limit 51 is therefore greater than or equal to the translated output current limit 53, and the maximum inductor current calculator 55 therefore outputs a maximum allowed charge current 52 that is greater than or equal to the desired charge current 60 output by the output voltage regulator 58. The selection block 66 implements a minimum function to select the value with a lower magnitude, in this case the desired charge current 60, and outputs this as the setpoint inductor current 68. The inductor current regulator 70 thereafter controls the DC-DC converter 28 to achieve the setpoint inductor current 68, which in this case is the desired charge current 60, while stepping up the voltage. Higher voltage electricity is supplied via the second terminal 36 to charge the second battery 16. The status indicator light 42 is lit to show that the second battery 16 is being charged. Because current is flowing from the energy source 78 and/or first battery 14 to the second battery 16, the measured input voltage 54 will drop. The input current limit 51 is therefore adjusted accordingly. The CV power control 31 is configured to continuously balance the power shared by the first and second batteries 14, 16, prioritizing (in this example) charging of the first battery 14.

FIG. 6 shows a schematic of the flow of electrical energy in another state of the system 10. In this state, the measured input voltage 54 at the first terminal 34 is less than the first setpoint voltage 56. (This means, for example, that the first battery 14 is not fully charged, i.e., the measured voltage at the first terminal 34 is below V_{F}.) The input voltage regulator 50 outputs a value of Δ Max input that cancels or nearly cancels the user-input value 51a, resulting in the input current limit 51 being zero. The input current limit 51 therefore is less than the translated output current limit 53, and the maximum inductor current calculator 55 therefore outputs a maximum allowed charge current 52 that is less than the desired charge current 60 output by the output voltage regulator 58. The selection block 66 implements a minimum function to select the value with a lower magnitude, in this case the maximum allowed charge current 52, and outputs this as the setpoint inductor current 68. In a state in which the measured input voltage 54 at the first terminal 34 is less than the first setpoint voltage 56 (which, as noted, may be configured by the user), the maximum allowed charge current 52 may be 0 amps. Thus, the setpoint inductor current 68 would also be 0 amps and no charging current is provided to the second battery 16. Charging current is provided to the first battery 14, however, as the first battery 14 is prioritized by the CV power control 31 charging algorithm disclosed herein. The status indicator light 42 is lit to show the direction of power flow.

In this way, the power converter module 30 is configured to utilize energy from the energy source 78 to charge the second battery 16 only when the voltage of the energy source 78 (e.g., alternator 18) (determined at the first terminal 34) rises above the battery full resting voltage V_{F} and is in the upper region (between V_{F} and V_{AE}) of the diagram shown in FIG. 4. Due to the constant input voltage regulation of the power converter module 30, it is guaranteed that the first battery 14 and/or any load(s) 22 connected to the first battery 14 have priority in taking the available current from the energy source 78, and only when the energy source's voltage rises above the full resting voltage V_{F} of the first battery 14 is the excess energy transferred - if needed - to the second battery 16 and/or any load(s) 24 connected to the second battery 16. Furthermore, the power converter module 30 is configured to constantly adjust the inductor current so as to account for changing loads 22, 24. For example, if a load 22 is connected to the first battery 14, the measured voltage 54 at the first terminal 34 will drop below the first setpoint voltage 56. The input voltage regulator 50 will decrease the input current limit 51, which will then be the lesser of the values compared by the maximum current calculator 55, and hence will be output as the maximum allowed charge current 52. The maximum allowed charge current 52 will then dictate the setpoint inductor current 68, which will decrease in comparison to the setpoint inductor current before the load 22 was applied. Similarly, if a load 24 is connected to the second battery 16, this will result in a voltage drop at the first terminal 34 as well, as the DC-DC converter 28 will attempt to pull some of the energy from the first battery 14. The input voltage regulator 50 will thus decrease the input current limit 51, resulting in a lower maximum allowed charge current 52 and a lower setpoint inductor current 68. Conversely, if the load 24 decreases, the CV power control 31 will increase the input current limit 51, resulting in an increased setpoint inductor current 68.

FIG. 7 shows a schematic of the flow of electrical energy in another state of the system 10, illustrating the bidirectionality of the power converter module 30. In the embodiments of FIGS. 5 and 6, there was an energy source 78 connected to the first battery 14 (e.g., the engine 12 was running, and thus the alternator 18 was generating electrical energy) to charge the first battery 14 and (in the state shown in FIG. 5) the second battery 16. In contrast, in the state shown in FIG. 7, there is no energy source connected to the first battery 14. In such a state, a manual or automatic input can be provided to the power converter module 30 to reverse the flow of electrical energy, such that energy can flow from the second terminal 36 to the first terminal 34, the function of the terminals in this case being reversed. The DC-DC converter 28 steps down the higher voltage input to the second terminal 36 to charge the first battery 14 at a lower voltage. In this state, the CV power control 31 may also be used, only with the second battery 16 now being prioritized for charging. The status indicator light 40 is lit to show that the first battery 14 is being charged by the second battery 16. FIG. 7 also shows an optional source of electrical energy connected to the second battery 16, which energy source 78 can be, for example, a charger. The CV power control 31 will operate to prioritize charging the second battery 16 (now the input to the DC-DC converter 28) before the first battery 14 (now on the output side) will be charged. The user can input the specifications of the charger as the user-specified max input 51a, and the CV power control 31 will ensure that the DC-DC converter 28 will not draw more current than that which the charger can deliver. The algorithm works the same way as described hereinabove with respect to FIG. 3, only the measured input voltage is that of the second battery 16 and the measured output voltage is that of the first battery 14. The first setpoint voltage 56 is accordingly a value related to the nominal voltage of the second battery 16. For example, if the second battery is a nominal 48-volt battery, the first setpoint voltage 56 may be, for example, 53 volts.

The manual input for operating the system 10 in the state shown in FIG. 7 may be made via a remote switch (not shown). The automatic input for operating the system 10 in the state shown in FIG. 7 may be made via an external control module or software application. For example, the external control module can determine whether the first battery 14 requires charge, and can send a command to the power converter module 30 to reverse the direction of current.

The specifications of the power converter module 30 are not limiting on the scope of the present disclosure, but some exemplary specifications are provided herein for purposes of further illustration. In some embodiments, the nominal high side voltage may be 48 volts or 36 volts, with a range of 32-64 volts DC. In some embodiments, the nominal low side voltage may be 12 volts, with a range of 8-16 volts. In some embodiments, the nominal low side voltage may be 24 volts, with a range of 16-32 volts. For a power converter module 30 configured for a nominal 12-volt input, and a nominal 48-volt or 36-volt output, the maximum input current may be 60 amps and the maximum output current may be 15 amps. For a power converter module 30 configured for a nominal 24-volt input, and a nominal 48-volt or 36-volt output, the maximum input current may be 50 amps and the maximum output current may be 15 amps.

Thus, the present disclosure is of a system 10 comprising a first battery 14, a second battery 16, and a DC-DC converter 28 electrically connected between the first and second batteries 14, 16. An input voltage regulator 50 adjusts an input current limit 51 such that a measured voltage 54 of the first battery 14 does not drop below a first setpoint voltage 56. A processor 80 determines a maximum allowed charge current 52 based on the input current limit 51 and based on a predetermined charge current limit 53. An output voltage regulator 58 determines a desired charge current 60 so as to bring a measured voltage 62 of the second battery 16 to a second setpoint voltage 64. The DC-DC converter 28 outputs the maximum allowed charge current 52 or the desired charge current 60 so as to charge the second battery 16 while the measured voltage 54 of the first battery 14 is maintained at or above the first setpoint voltage 56.

According to some aspects, the system 10 further comprises an internal combustion engine 12 and at least one house load 24. The first battery 14 is an engine battery electrically connected to a starter motor 20 of the engine 12. The second battery 16 is a service battery electrically connected to the at least one house load 24. An alternator 18 is driven by the engine 12. The alternator 18 is configured to generate electrical energy to charge at least one of the first and second batteries 14, 16.

According to some aspects, the processor 80 selects whichever of the maximum allowed charge current 52 or the desired charge current 60 has a lower magnitude as a setpoint inductor current 68.

According to some aspects, an inductor current regulator 70 determines an output control signal 72 that will bring a measured inductor current 74 of the DC-DC converter 28 close to the setpoint inductor current 68.

According to some aspects, the predetermined charge current limit 53 is a user-selected value.

According to some aspects, the first setpoint voltage 56 is a voltage at which the first battery 14 is fully charged.

According to some aspects, the system 10 further comprises a source of electrical energy 78. The first battery 14 is electrically connected to and configured to be charged by the source of electrical energy 78.

The present disclosure is also of a system 10 comprising a source of electrical energy 78. A first battery 14 is electrically connected to and configured to be charged by the source of electrical energy 78. A second battery 16 is electrically connected to at least one load 24. A power converter 26 is electrically connected between the first battery 14 and the second battery 16. The power converter 26 is configured such that the source of electrical energy is used to charge the second battery 16 only if a measured voltage of the first battery 14 is above a first setpoint voltage 56.

According to some aspects, the power converter 26 comprises a DC-DC converter 28, an input voltage regulator 50 that adjusts an input current limit 51 such that a measured voltage 54 of the first battery 14 does not drop below the first setpoint voltage 56, a processor 80 that determines a maximum allowed charge current 52 based on the input current limit 51 and based on a predetermined charge current limit 53, and an output voltage regulator 58 that determines a desired charge current 60 so as to bring a measured voltage 62 of the second battery 16 to a second setpoint voltage 64. The DC-DC converter 28 outputs the maximum allowed charge current 52 or the desired charge current 60 so as to charge the second battery 16 while the measured voltage 54 of the first battery 14 is maintained at or above the first setpoint voltage 56.

According to some aspects,the processor 80 selects whichever of the maximum allowed charge current 52 or the desired charge current 60 has a lower magnitude as a setpoint inductor current 68.

According to some aspects, an inductor current regulator 70 determines an output control signal 72 that will bring a measured inductor current 74 of the DC-DC converter 28 close to the setpoint inductor current 68.

According to some aspects, the first setpoint voltage 56 is a voltage at which the first battery 14 is fully charged.

According to some aspects, the source of electrical energy 78 is an alternator 18 driven by an internal combustion engine 12, and the first battery 14 is electrically connected to a starter motor 20 of the engine 12.

### Examples

Example 1. A system comprising: a source of electrical energy; a first battery electrically connected to and configured to be charged by the source of electrical energy; a second battery electrically connected to at least one load; and a power converter electrically connected between the first battery and the second battery; wherein the power converter is configured such that the source of electrical energy is used to charge the second battery only if a measured voltage of the first battery is above a first setpoint voltage; and wherein the power converter comprises: a DC-DC converter; an input voltage regulator that adjusts an input current limit such that a measured voltage of the first battery does not drop below the first setpoint voltage; a processor that determines a maximum allowed charge current based on the input current limit and based on a predetermined output current limit; and an output voltage regulator that determines a desired charge current so as to bring a measured voltage of the second battery to a second setpoint voltage; wherein the DC-DC converter outputs the maximum allowed charge current or the desired charge current so as to charge the second battery while the measured voltage of the first battery is maintained at or above the first setpoint voltage.

Example 2. The system of example 1, wherein the first setpoint voltage is a voltage at which the first battery is fully charged.

Example 3. The system of example 1, wherein the processor selects whichever of the maximum allowed charge current or the desired charge current has a lower magnitude as a setpoint inductor current.

Example 4. The system of example 3, further comprising an inductor current regulator that determines an output control signal that will bring a measured inductor current of the DC-DC converter close to the setpoint inductor current.

Example 5. The system of example 1, wherein: the source of electrical energy is an alternator driven by an internal combustion engine; and the first battery is electrically connected to a starter motor of the engine.

Example 6. A system comprising: a first battery; a second battery; a DC-DC converter electrically connected between the first and second batteries; an input voltage regulator that adjusts an input current limit such that a measured voltage of the first battery does not drop below a first setpoint voltage; a processor that determines a maximum allowed charge current based on the input current limit and based on a predetermined output current limit; and an output voltage regulator that determines a desired charge current so as to bring a measured voltage of the second battery to a second setpoint voltage; wherein the DC-DC converter outputs the maximum allowed charge current or the desired charge current so as to charge the second battery while the measured voltage of the first battery is maintained at or above the first setpoint voltage.

Example 7. The system of example 6, further comprising an internal combustion engine and at least one house load; wherein the first battery is an engine battery electrically connected to a starter motor of the engine; and wherein the second battery is a service battery electrically connected to the at least one house load.

Example 8. The system of example 7, further comprising an alternator driven by the engine, wherein the alternator is configured to generate electrical energy to charge at least one of the first and second batteries.

Example 9. The system of example 6, wherein the processor selects whichever of the maximum allowed charge current or the desired charge current has a lower magnitude as a setpoint inductor current.

Example 10. The system of example 9, further comprising an output current regulator that determines an output control signal that will bring a measured inductor current of the DC-DC converter close to the setpoint inductor current.

Example 11. The system of claim 6, further comprising a source of electrical energy, wherein the first battery is electrically connected to and configured to be charged by the source of electrical energy.

Example 12. The system of example 6, wherein the predetermined output current limit is a user-selected value.

Example 13. The system of example 6, wherein the first setpoint voltage is a voltage at which the first battery is fully charged.

Example 14. A power converter module comprising: a first terminal configured to be connected to a first battery and a source of electrical energy; a second terminal configured to be connected to a second battery; a DC-DC converter electrically connected between the first terminal and the second terminal; an input voltage regulator that adjusts an input current limit such that a measured voltage of the first battery does not drop below a first setpoint voltage; a processor that determines a maximum allowed charge current based on the input current limit and based on a predetermined output current limit; and an output voltage regulator that determines a desired charge current so as to bring a measured voltage of the second battery to a second setpoint voltage; wherein the DC-DC converter outputs the maximum allowed charge current or the desired charge current so as to charge the second battery while the measured voltage of the first battery is maintained at or above the first setpoint voltage.

Example 15. The power converter module of example 14, wherein the DC-DC converter selects whichever of the maximum allowed charge current or the desired charge current has a lower magnitude as a setpoint inductor current.

Example 16. The power converter module of example 15, further comprising an output current regulator that determines an output control signal that will bring a measured inductor current of the DC-DC converter close to the setpoint inductor current.

Example 17. The power converter module of example 14, wherein the source of electrical energy is an alternator; wherein the first battery is an engine battery electrically connected to a starter motor of an internal combustion engine that drives the alternator; and wherein the second battery is a service battery electrically connected to at least one house load.

Example 18. The power converter module of example 14, wherein the predetermined output current limit is a user-selected value.

Example 19. The power converter module of example 14, wherein the first setpoint voltage is a voltage at which the first battery is fully charged.

In the above description, certain terms have been used for brevity, clarity, and understanding. No unnecessary limitations are to be inferred therefrom beyond the requirement of the prior art because such terms are used for descriptive purposes and are intended to be broadly construed. The order of method steps or decisions shown in the Figures and described herein are not limiting on the appended claims unless logic would dictate otherwise. It should be understood that the decisions and steps can be undertaken in any logical order and/or simultaneously. The different systems and methods described herein may be used alone or in combination with other systems and methods. It is to be expected that various equivalents, alternatives and modifications are possible within the scope of the appended claims.

## Claims

1. A power converter module (30) comprising:
a first terminal (34) configured to be connected to a first battery (14) and a source of electrical energy (78);
a second terminal (36) configured to be connected to a second battery (16);
a DC-DC converter (28) electrically connected between the first terminal (34) and the second terminal (36);
an input voltage regulator (50) that adjusts an input current limit (51) such that a measured voltage (54) of the first battery (14) does not drop below a first setpoint voltage (56);
a processor (80) that determines a maximum allowed charge current (52) based on the input current limit (51) and based on a predetermined output current limit (53); and
an output voltage regulator (58) that determines a desired charge current (60) so as to bring a measured voltage (62) of the second battery (16) to a second setpoint voltage (64);
wherein the DC-DC converter (28) outputs the maximum allowed charge current (52) or the desired charge current (60) so as to charge the second battery (16) while the measured voltage (54) of the first battery (14) is maintained at or above the first setpoint voltage (56).

2. The power converter module of claim 1, wherein the DC-DC converter (28) selects whichever of the maximum allowed charge current (52) or the desired charge current (60) has a lower magnitude as a setpoint inductor current (68).

3. The power converter module of claim 2, further comprising an output current regulator (70) that determines an output control signal (72) that will bring a measured inductor current (74) of the DC-DC converter (28) close to the setpoint inductor current (68).

4. The power converter module of any of claims 1-3, wherein the predetermined output current limit (53) is a user-selected value.

5. The power converter module of any of claims 1-4, wherein the first setpoint voltage (56) is a voltage at which the first battery (14) is fully charged.

6. A system (10) comprising:
a source of electrical energy (78);
a first battery (14) electrically connected to and configured to be charged by the source of electrical energy (78);
a second battery (16) electrically connected to at least one load (22, 24); and
the power converter module of any of claims 1-5 electrically connected between the first battery (14) and the second battery (16);
wherein the power converter module is configured such that the source of electrical energy (78) is used to charge the second battery (16) only if the measured voltage of the first battery (14) is above the first setpoint voltage.

7. The system of claim 6, wherein:
the source of electrical energy is an alternator (18) driven by an internal combustion engine (12); and
the first battery (14) is electrically connected to a starter motor (20) of the engine (12).

8. A system (10) comprising:
a first battery (14);
a second battery (16); and
the power converter module of any of claims 1-5 electrically connected between the first battery (14) and the second battery (16).

9. The system of claim 8, further comprising an internal combustion engine (12) and at least one house load (22, 24);
wherein the first battery (14) is an engine battery electrically connected to a starter motor (20) of the engine (12); and
wherein the second battery (16) is a service battery electrically connected to the at least one house load (22, 24).

10. The system of claim 9, further comprising an alternator (18) driven by the engine (12), wherein the alternator (18) is configured to generate electrical energy to charge at least one of the first and second batteries (14, 16).

11. The system of any claims 8-10, further comprising a source of electrical energy (78), wherein the first battery (14) is electrically connected to and configured to be charged by the source of electrical energy (78).
